Europäisches Patentamt

European Patent Office

Office européen des brevets

(19)

(11) Publication number: **0 037 166**
**B1**

(12) **EUROPEAN PATENT SPECIFICATION**

(45) Date of publication of patent specification: **08.02.84**

(51) Int. Cl.³: **B 60 R 25/02**

(21) Application number: **81300646.7**

(22) Date of filing: **17.02.81**

(54) Transmission shift lever backdrive and column locking mechanisms.

(30) Priority: **25.03.80 US 133890**

(43) Date of publication of application:
**07.10.81 Bulletin 81/40**

(45) Publication of the grant of the patent:
**08.02.84 Bulletin 84/6**

(84) Designated Contracting States:
**DE FR GB IT**

(56) References cited:
**DE - A - 2 038 273**
**FR - A - 2 176 373**
**US - A - 2 234 010**
**US - A - 3 590 612**
**US - A - 3 590 613**
**US - A - 3 625 032**
**US - A - 3 648 490**
**US - A - 3 901 097**

(73) Proprietor: GENERAL MOTORS CORPORATION
General Motors Building 3044 West Grand
Boulevard
Detroit Michigan 48202 (US)

(72) Inventor: Arndt, Frederick Paul
1945 Seminole Lane
Saginaw Michigan 48603 (US)

(74) Representative: Breakwell, John Neil Bower et al,
GM Patent Section Luton Office (F6) P.O. Box No.
3 Kimpton Road
Luton Beds. LU2 OSY (GB)

Courier Press, Leamington Spa, England.

Transmission shift lever backdrive and column locking mechanisms

This invention relates to backdrive mechanisms linking a transmission shift lever and a vehicle steering column, and participating in a column locking function.

In the specification of United States Patent No. 3,625,032 there is disclosed a transmission shift lever backdrive and column locking mechanism for a motor vehicle having a floor-mounted transmission shift lever movable in a plurality of operating conditions including "Park" and "Reverse", a steering column having a rotary portion selectively movable into a position for locking and a connection from the transmission shift lever to the steering column locking mechanism for controlling the position of the rotary portion of the steering column to thereby permit locking of the steering column only in a selected position of the transmission shift lever.

The present invention is concerned with an improved form of backdrive and column locking mechanisms which is fully under the control of the transmission shift lever, whilst also ensuring that the shift lever is in the "Park" position before the steering column can be locked.

To achieve this result, the subject-matter of the present application is characterized in that the mechanism comprises a support bracket mounted on the steering column and having integrally formed guide means, coupling means slidably disposed in the guide means and including cam means and linear guide means, flexible force and motion-transmitting means connected between the coupling means and the transmission shift lever for positioning the coupling means in accordance with the selected operative condition of the transmission shift lever, and actuator means pivotally mounted on the steering column and operatively connected to the rotary steering column portion, the actuator means including cam slot means selectively engageable by the cam means for enforcing pivoting of the actuator means when the shift lever is moved from the "Reverse" operating condition to the "Park" operating condition, for positioning the rotary steering column portion to permit locking of the steering column, and linear guide slot means for selective engagement by the linear guide means when the transmission shift lever is moved from the "Reverse" operating condition to the other operating conditions, for preventing pivoting of the actuator means and thereby preventing the rotary steering column portion from being moved into the position permitting locking of the steering column.

With this mechanism, once the steering column has been locked the backdrive prevents movement of the shift lever until the steering column is again unlocked.

In the accompanying drawing:

Figure 1 is a perspective view of a portion of the inside of an automobile;

Figure 2 is a top view of a portion of a vehicle steering column showing one embodiment of a backdrive and locking mechanism in accordance with the invention, in one operating condition;

Figure 3 is a view similar to Figure 2 but showing the backdrive and locking mechanism in another operating condition;

Figure 4 is a cross-section on line 4—4 of Figure 2; and

Figure 5 is a side elevational view, partly in section, of a component of the backdrive and locking mechanism.

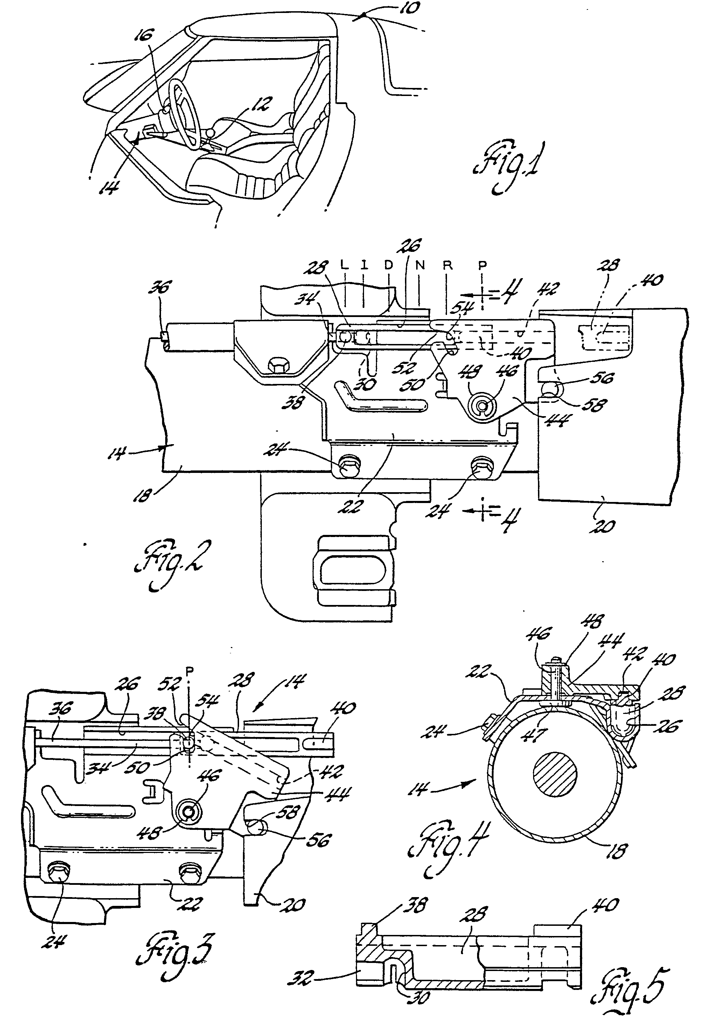

In the drawing, Figure 1 shows a portion of a passenger vehicle, generally designated 10, having a floor-mounted transmission shift lever 12 and a steering column, generally designated 14. The transmission shift lever 12 is preferably constructed in accordance with the floor-mounted shift control mechanism shown in GB—A—2 042 444 (Published 24.09.1980).

The steering column 14 includes a locking mechanism 16 which may be constructed in accordance with our United States Patent No. 3,648,490 or 3,572,067. These steering column locking mechanisms permit the operator to lock the steering column to prevent unauthorised use, and also provide for locking of the column-mounted transmission shift control mechanisms. Most current steering column mechanisms are designed such that the steering column lock cannot be moved to the locking position until the transmission has been placed in the "Park" position. As is well-known in such mechanisms, a portion of the steering column is adapted to rotate with transmission selection to permit the controlled locking of the steering column.

There is seen in Figure 2 a portion of the steering column 14 including a mast jacket 18 and a shift bowl (rotatable member) 20. A support bracket 22 is secured to the mast jacket 18 by a plurality of fasteners such as 24, shown in Figures 2 and 4.

As is seen in Figure 4, the support bracket 22 includes a U-section guide slot 26 in which is slidably disposed a coupling member 28. As is seen in Figure 5, the coupling member 28 includes a ball socket 30 and has a substantially circular aperture (or passage) 32 formed in one end thereof and connected to the ball socket 30. The ball socket 30 and aperture 32 are used to provide a connection to one end 34 of a flexible cable 36, the other end of which (not shown) is connected to the transmission shift lever 12. This connection can be made as described in the aforesaid GB—A—2 042 444 (Published 24.09.1980).

The coupling member 28 has formed integrally therewith a cam pin 38 and a guide member 40. As is seen in Figures 2 and 4, the guide member 40 can slide along, and out of the end of, a slot 42 formed in an actuator 44.

The actuator 44 is pivotally mounted on the support bracket 22 by a pivot pin 46, which is retained in position by an enlarged head 47 and a C-ring 48.

The actuator 44 also has a cam slot 50 formed therein. The cam slot 50 has an opening 52 which is slightly wider than the cam pin 38, and a groove portion 54 which is essentially the same dimension as the cam pin 38. The actuator 44 also has integral therewith a pin 56 which is disposed in a slot 58 formed in the shift bowl 20.

When the transmission shift lever 12 is in the "Low" (L) position, the cam pin 38 and guide member 40 will be positioned as shown in Figure 2. That is, the cam pin 38 is displaced longitudinally from the opening 52, and the guide member 40 is slidably engaged in the slot 42. As the transmission shift lever 12 is moved from the (L) position through the "Intermediate" (I), "Drive" (D) and "Neutral" (N) positions to the "Reverse" (R) position, the cam pin 38 will engage in the cam slot 50 through the opening 52. This engagement occurs when the transmission shift lever is moved from "Neutral" (N) to "Reverse" (R). Also, as seen in phantom line in Figure 2, the guide member 40 is disengaged from the slot 42 as the transmission shift lever is moved from "Neutral" (N) to "Reverse" (R).

When the transmission shift lever 12 is moved from "Reverse" (R) to "Park" (P), the actuator 44 will pivot on the pivot pin 46 from the position shown in Figure 2 to the position shown in Figure 3, this pivotal movement being enforced by the cam pin 38 operating in the cam slot 50. Pivoting of the actuator 44 causes rotary movement of the shift bowl 20 by way of the drive connection formed by the pin 56 and slot 58. The rotary motion of the shift bowl 20 will place a column locking mechanism such as that shown in the aforesaid United States Patent No. 3,648,490 in a position to permit locking.

When the steering column 14 has been locked in the position shown in Figure 3, the flexible cable 36 co-operates with the shift lever 12 to prevent movement of the shift lever 12 from the "Park" (P) position. When the steering column lock mechanism is subsequently moved from the locking position to one of its other operating positions, the transmission shift lever 12 can be moved from the "Park" position. Movement of the transmission shift lever 12 from "Park" (P) to "Reverse" (R) will result in pivoting of the actuator 44 from the position shown in Figure 3 to the position shown in Figure 2, and with further movement of the transmission shift lever 12 from "Reverse" (R) to "Neutral" (N), the cam pin 38 will be disengaged from the cam slot 50, and the guide member 40 will slidably engage the slot 42. The guide member 40 will in fact engage the slot 42 prior to the cam pin 38 disengaging the cam slot 50, thereby ensuring that the pivotal position of the actuator 44 is always under the control of the coupling member 28.

The coupling member 28 is continually guided for longitudinal movement in the U-section guide slot 26, which will ensure proper alignment between the components of the coupling member 28 and the actuator 44.

## Claims

1. A transmission shift lever backdrive and column locking mechanism for a motor vehicle having a floor-mounted transmission shift lever (12) movable in a plurality of operating conditions including "Park" and "Reverse", a steering column (14) having a rotary portion (20) selectively movable into position for locking, and a connection (36) from the transmission shift lever to the steering column locking mechanism for controlling the position of the rotary portion of the steering column to thereby permit locking of the steering column only in a selected position of the transmission shift lever, characterised in that the mechanism comprises a support bracket (22) mounted on the steering column (14) and having integrally formed guide means (26), coupling means (28) slidably disposed in the guide means and including cam means (38) and linear guide means (40) flexible force and motion-transmitting means (36) connected between the coupling means and the transmission shift lever (12) for positioning the coupling means in accordance with the selected operative condition of the transmission shift lever, and actuator means (44) pivotally mounted on the steering column and operatively connected to the rotary steering column portion (20), the actuator means including cam slot means (50) selectively engageable by the cam means for enforcing pivoting of the actuator means when the shift lever is moved from the "Reverse" operating condition to the "Park" operating condition, for positioning the rotary steering column portion to permit locking of the steering column, and linear guide slot means (42) for selective engagement by the linear guide means when the transmission shift lever is moved from the "Reverse" operating condition to the other operating conditions, for preventing pivoting of the actuator means and thereby preventing the rotary steering column portion from being moved into the position permitting locking of the steering column.

2. A transmission shift lever backdrive and column locking mechanism according to claim 1, characterised in that the rotary portion of the steering column (14) comprises a shift bowl (20).

3. A transmission shift lever backdrive and column locking mechanism according to claim 1 or 2, characterised in that the guide means formed on the support bracket (22) comprises a U-section guide slot (26), the coupling means comprises a linearly movable coupling member (28) slidably disposed in the U-section guide slot, the cam means of the coupling member comprises a cam pin (38) for engagement with the cam slot means (50), and the linear guide means comprises a guide member (40) selectively engageable with the linear guide slot means (42).

## Revendications

1. Mécanisme de commande de retour d'un levier sélecteur de transmission et de verrouillage de colonne de direction pour un véhicule à moteur ayant un levier de commande de transmission (12) monté sur le plancher et déplaçable dans plusieurs positions de fonctionnement comprenant les positions "parcage" et "Marche arrière", une colonne de direction (14) ayant une partie tournante (20) déplaçable sélectivement dans une position permettant le verrouillage, et une liaison (36) du levier sélecteur de transmission avec le mécanisme de verrouillage de la colonne de direction pour commander la position de la partie tournante de la colonne de direction, afin de permettre ainsi le verrouillage de la colonne de direction uniquement dans une position sélectionnée du levier sélecteur de transmission, caractérisé en ce que le mécanisme comprend une console de support (22) montée sur la colonne de direction (14) et ayant des moyens de guidage (26) venus de matière, un élément d'accouplement (28) monté coulissant dans les moyens de guidage, et comprenant un élément formant came (38) et un élément de guidage linéaire (40), un élément flexible (36) de transmission de force et de mouvement relié entre l'élément d'accouplement et le levier sélecteur de transmission (12) de façon à placer l'élément d'accouplement selon la position sélectionnée du levier sélecteur de transmission, et un actionneur (44) monté pivotant sur la colonne de direction et relié fonctionnellement à la partie tournante (20) de la colonne de direction, actionneur comprenant une encoche à came (50) dans laquelle peuvent s'engager sélectivement les moyens formant came (38) pour forcer le pivotement de l'actionneur quand le levier de commande est déplacé de la position de fonctionnement "Marche arrière" à la position de fonctionnement "parcage" afin de placer la partie tournante de la colonne de direction dans une position permettant le verrouillage de la colonne de direction, et une rainure de guidage linéaire (42) pour une venue en prise avec l'élément de guidage linéaire quand le levier sélecteur de transmission est déplacé de la position de fonctionnement "Marche arrière" aux autres positions de fonctionnement afin d'empêcher le pivotement de l'actionneur et empêcher ainsi la partie rotative de la colonne de direction d'être déplacée dans la position permettant le verrouillage de la colonne de direction.

2. Mécanisme de commande de retour de levier sélecteur et de verrouillage de colonne de direction suivant la revendication 1, caractérisé en ce que la partie tournante de la colonne de direction (14) comprend un bol tournant (20).

3. Mécanisme de commande de retour de levier sélecteur de transmission et de verrouillage de la colonne de direction suivant la revendication 1 ou 2, caractérisé en ce que les moyens de guidage formés sur la console de support (22) comprennent une gorge (26) de guidage à profil en U, l'élément d'accouplement comprend un élément d'accouplement (28) déplaçable linéairement et monté coulissant dans la gorge de guidage à profil en U, l'élément à came d'accouplement comprend un doigt formant came (38) destiné à être engagé dans l'élément d'encoche à cam (50) et l'élément de guidage linéaire comprend un élément de guidage (40) pouvant venir en prise sélectivement avec le rainure de guidage linéaire (42).

## Patentansprüche

1. Fahrstufenwählhebel-Rückstell- und Lenksäulen-Verriegelungsmechanismus für ein Motorfahrzeug mit einem am Boden angebrachten Fahrstufenwählhebel (12), der in eine Vielzahl von Betriebsstellungen bewegbar ist, einschließlich einer "Park"- und "Rückwärts"-stellung, einer Lenksäule (14) mit einem Drehabschnitt (20), der wahlweise in eine Verriegelungsstellung bewegbar ist, und einer Verbindung (36) vom Fahrstufenwählhebel zum Lenksäulen-Verriegelungsmechanismus zur Steuerung der Stellung des Lenksäulen-Drehabschnitts, um damit ein Verriegeln der Lenksäule nur in einer vorgewählten Stellung des Fahrstufenwählhebels zu erlauben, dadurch gekennzeichnet, daß der Mechanismus einen Tragbügel (22) umfaßt, der an der Lenksäule (14) angebracht ist und eine integriert ausgebildete Führungseinrichtung (26) aufweist, eine Kupplungseinrichtung (28), die verscheibbar in der Führungseinrichtung angeordnet ist und eine Nockeneinrichtung (38) einschließt sowie eine lineare Führungseinrichtung (40), eine flexible Kraft und Bewegung übertragende Einrichtung (36), die zwischen der Kupplungseinrichtung und dem Fahrstufenwählhebel (12) eingeschaltet ist, um die Kupplungseinrichtung in Übereinstimmung mit der vorgewählten Betriebsstellung des Fahrstufenwählhebels zu positionieren, und eine Betätigungseinrichtung (44), die auf der Lenksäule schwenkbar angebracht ist und wirksam mit dem Lenksäulen-Drehabschnitt (20) verbunden ist, wobei die Betätigungseinrichtung ein Kurvenschlitzeinrichtung (50) einschließt, die wahlweise mit der Nockeneinrichtung in Eingriff bringbar ist, um ein Schwenken der Betätigungseinrichtung zu erzwingen, wenn der Fahrstufenwählhebel von der "Rückwärts"-Betriebsstellung zur "Park"-Betriebsstellung bewegt wird, um den Lenksäulen-Drehabschnitt in eine Stellung zu bringen, die ein Verriegeln der Lenksäule erlaubt, und eine Führungsschlitzeinrichtung (42) zum wahlweisen Eingriff durch die lineare Führungseinrichtung, wenn der Fahrstufenwählhebel von der "Rückwärts"-Betriebsstellung in die anderen Betriebsstellung bewegt wird, un ein Schwenken der Betätigungseinrichtung zu verhindern und um dadurch zu verhindern, daß der Lenksäulen-Drehabschnitt in eine Stellung bewegt wird, die ein Verriegeln der Lenksäule erlaubt.

2. Fahrstufenwählhebel-Rückstell- und Lenksäulen-Verriegelungsmechanismus nach Anspruch 1, dadurch gekennzeichnet, daß der Drehabschnitt der Lenksäule (14) einen Verstellbecher (20) umfaßt.

3. Fahrstufenwählhebel-Rückstell- und Lenksäulen-Verriegelungsmechanismus nach Anspruch 1 oder 2, dadurch gekennzeichnet, daß die am Tragbügel (22) ausgebildete Führungsvorrichtung einen U-förmigen Führungsschlitz (26) umfaßt, daß die Kupplungseinrichtung ein linear bewegliches Kupplungsglied (28) umfaßt, das im U-förmigen Führungsschlitz gleitend angeordnet ist, daß die Nockeneinrichtung des Kupplungsglieds einen Nockenstift (38) zum Eingriff mit der Kurvenschlitzeinrichtung (50) umfaßt und daß die lineare Führungseinrichtung ein Führungsglied (40) umfaßt, das wahlweise mit der linearen Führungsschlitzeinrichtung (42) in Eingriff bringbar ist.

0 037 166

Fig.1

Fig.2

Fig.3

Fig.4

Fig.5

1